# EUROPÄISCHE PATENTSCHRIFT

(11) **EP 2 651 529 B1**
(45) Veröffentlichungstag und Bekanntmachung des Hinweises auf die Patenterteilung: **03.10.2018**
(21) Anmeldenummer: 11772898.0
(22) Anmeldetag: 19.10.2011
(51) Int. Cl.: B01D 29/48, B01D 29/52, B01D 29/60, B01D 29/66, B01D 29/90

(54) **FILTERVORRICHTUNG**
FILTER DEVICE
DISPOSITIF DE FILTRAGE

(30) Priorität: 16.12.2010 DE 102010054716
(43) Veröffentlichungstag der Anmeldung: 23.10.2013
(73) Patentinhaber: Hydac Process Technology GmbH, 66538 Neunkirchen (DE)
(72) Erfinder: WNUK, Ralf, 66450 Bexbach/Kleinottweiler (DE); BÖTTCHER, Thomas, 66557 Illingen-Hüttigweiler (DE); OLSCHOK, Markus, 66540 Neunkirchen (DE); GERSTNER, Jörg Hermann, 66346 Püttingen (DE)
(74) Vertreter: Bartels und Partner, Patentanwälte
(86) Internationale Anmeldenummer: PCT/EP2011/005251
(87) Internationale Veröffentlichungsnummer: WO 2012/079661

(56) Entgegenhaltungen:
- WO-A1-02/062447
- DE-A1-102004 037 280
- DE-U1- 20 211 556
- GB-A- 1 037 837
- US-A- 3 445 002
- US-A- 3 493 113

## Beschreibung

Die Erfindung betrifft eine Filtervorrichtung nach dem Oberbegriff von Patentanspruch 1.

Filtervorrichtungen dieser Art sind auf einer großen Vielzahl unterschiedlichster Einsatzgebiete und für die Filtration verschiedenster strömungsfähiger Medien im Einsatz, wobei je nach Anwendungsgebiet unterschiedliche Bauweisen der Vorrichtung in Frage kommen. Bevorzugte Anwendungsgebiete sind die Reinigung von Fluiden wie Hydraulikflüssigkeiten, Schmier- oder Kraftstoffen. Ebenso können derartige Vorrichtungen für Wasseraufbereitung benutzt werden oder in Verbindung mit Prozess- oder Arbeitsfluiden anderer Natur.

Ungeachtet der unterschiedlichen Bauweisen und der großen Vielfalt der Einsatzgebiete müssen diese Filtervorrichtungen der gemeinsamen Anforderung gerecht werden, nämlich den störungsfreien Betrieb des angeschlossenen, mit dem Filtrat zu versorgenden System zu gewährleisten.

In DE 199 56 859 A1 ist eine Rückspülfiltervorrichtung offenbart, bei der eine Rückspülleitung, die während Rückspülvorgängen eine Rückspülmenge an Fluid aus dem Filtergehäuse abführt, mit einer Unterdruckeinrichtung verbindbar ist, die aktivierbar ist, um an einem jeweils rückzuspülenden Filterelement einen Unterdruck zu erzeugen. Die Unterdruckeinrichtung weist eine Saugpumpe auf, die in Art eines Membranspeichers aufgebaut ist, dessen Membran mittels eines mechanischen Antriebs für Pumpbewegungen auslenkbar ist. Während bei dieser bekannten Lösung zwar die Intensität der Rückspülung gesteigert wird, führt der durch Saugen verursachte Anstieg der Rückspülmenge zu einem verstärkten, durch Nebenstrom verursachten Abfall des Volumenstroms des Filtrats.

Die GB 1 037 837 A offenbart eine Rückspülvorrichtung zur Reinigung eines siebartig ausgebildeten Filterelements, wobei auch die dahingehende Filtervorrichtung mit einem Druckspeicher auf der Auslassseite des Filterelements versehen ist. Der zylinderförmig ausgeführte Druckspeicher weist ein Trennelement auf, welches durch eine am Filtergehäuse abgestützte Feder in Richtung des Reinraums der Filtervorrichtung vorgespannt ist. Bei einem Verblocken der Siebkörbe des Filterelements und dem damit einhergehenden Anstieg des Drucks auf der Rohseite wird bei der bekannten Vorrichtung ein Rückspülvorgang ausgelöst, bei dem der durch das federbelastete Trennelement ausgeübte Druck den Rückspülvorgang zur Abreinigung des Filterelements unterstützt. Die bekannte Vorrichtung baut groß auf und die zum Einleiten des Rückspülvorgangs eingesetzten zahlreichen Ventile, Federn und Magnete stehen einem langfristigen und zuverlässigen Betriebsverhalten entgegen.

Die US 3 445 002 A offenbart eine Filtervorrichtung mit einem Filtergehäuse, in dem mehrere Filterelemente angeordnet sind, die innerhalb des Filtergehäuses jeweils eine Reinseite von einer Rohseite trennen. Bei der bekannten Vorrichtung ist auf der Reinseite des Filtergehäuses eine Speichereinrichtung vorgesehen, die ein kolbenförmiges Trennelement aufweist, welches gegen das Gehäuse mittels einer Druckfeder abgestützt ist. Das kolbenartige Trennelement unterteilt hierbei die Speichereinrichtung in der Art eines Kolbenspeichers in den die Feder aufweisenden Arbeits- und den der Reinseite der Filterelemente zugeordneten Druckraum. Eine außerhalb des Speichergehäuses angeordnete Ventil-einrichtung dient dem Ausleiten von schlammartigen Filterrückständen aus dem Speichergehäuse heraus in einen externen Sammelbehälter.

Durch DE 10 2004 037 280 A1 ist eine gattungsgemäße Filtervorrichtung bekannt, mit mindestens einem Filtergehäuse, in dem mehrere Filterelemente angeordnet sind, die innerhalb des Filtergehäuses eine Reinseite von einer Rohseite trennen, wobei das Filtergehäuse einen zylindrischen Innenraum bildet, der an seinem oberen Ende offen ist, um dessen Hochachse die Filterelemente in Form von Filterkerzen gruppiert sind, die für eine Filtration oder Rückspülung in beiden Richtungen durchströmbar sind, wobei zumindest ein Filterelement mittels einer Rückspüleinrichtung zum Abreinigen seiner wirksamen Filterfläche rückgespült wird, während gleichzeitig die anderen Filterelemente für die Filtration von innen nach außen durchströmt sind, und wobei die Filterelemente nacheinander mittels einer einen Drehantrieb aufweisenden Schwenkeinrichtung von ihrer Filtrationsstellung in eine auf eine Rückspülleitung der Rückspüleinrichtung ausgerichtete Rückspülstellung und wieder in die Filtrationsstellung zurück um die Hochachse schwenkbar angeordnet sind.

Ausgehend von diesem Stand der Technik liegt der Erfindung die Aufgabe zugrunde, eine Filtervorrichtung zur Verfügung zu stellen, deren Betriebsverhalten den zu stellenden Anforderungen in besonderem Maße gerecht wird.

Gemäß dem kennzeichnenden Teil des Patentanspruches 1 besteht eine wesentliche Besonderheit der Erfindung darin, dass auf der Reinseite des jeweiligen Filtergehäuses mindestens eine Speichereinrichtung in Form eines hydropneumatischen Druckspeichers vorgesehen ist, mit mindestens einem beweglichen Trennelement, das den Druckspeicher in einen Arbeitsraum und einen Druckraum unterteilt, von denen der Arbeitsraum mit einer Druckluftquelle verbindbar ist, dass der die Filterelemente umgebende Innenraum des Filtergehäuses die mit dem Druckraum des Druckspeichers verbundene Reinseite bildet und in den der die Fluidseite bildenden Druckraum des Druckspeichers übergeht, der zur Hochachse koaxial am Filtergehäuse angeordnet ist, dass die Rückspüleinrichtung in der mit der Rohseite des rückzuspülenden Filterelements verbundenen Rückspülleitung ein Rückspülventil aufweist, das für Rückspülvorgänge öffenbar ist, und dass an dem Arbeitsraum des Druckspeichers eine Ventileinrichtung angeschlossen ist, die in zeitlichem Zusammenhang mit der Betätigung des Rückspülventils für eine Zufuhr von Druckluft zu dem oder die Abgabe von Druckluft aus dem Arbeitsraum des Druckspeichers ansteuerbar ist. Dadurch läßt sich der Betrieb der Vorrichtung auf einfache Weise und je nach Bedarf durch eine Drucksteuerung unterstützen, die das im Filtergehäuse auf der Reinseite herrschende Druckniveau in Anpassung an den jeweiligen Betriebszustand beeinflußt. So lassen sich beispielsweise im normalen Filtrationsbetrieb Druckschwankungen durch Volumenänderung des am Filtergehäuse angeschlossenen Raumes der Speichereinrichtung ausgleichen (Pulsationsdämpfung), so dass Schwankungen des Volumenstroms des abgegebenen Filtrats vermieden sind. Ebenso kann eine bedarfsweise Unterstützung des Filtrationsvorganges durch einen saugenden Effekt der Speichereinrichtung bewirkt werden. Bei mit einer Rückspüleinrichtung versehenen Filtervorrichtungen kann mit besonderem Vorteil ein Abfall des Volumenstromes des Filtrats, wie er bei Einleiten eines Rückspülvorganges durch den Nebenstrom der Rückspülmenge verursacht wäre, durch eine Volumenkompensation mittels der Speichereinrichtung vermieden und/oder durch Druckbeaufschlagung auf der Reinseite der Vorrichtung die Rückspülung unterstützt werden.

Neben dem Vorteil der besonders kompakten Bauweise resultiert der weitere Vorteil, dass mit dem Betrieb der Speichereinrichtung keinerlei Strömungsverluste einhergehen, weil das Filtergehäuse unmittelbar in den Fluidraum des Druckspeichers übergeht.

Bei besonders bevorzugten Ausführungsbeispielen erstreckt sich die Öffnung des oberen Endes des Innenraumes des Filtergehäuses über dessen gesamten Innendurchmesser, wobei der Durchmesser des sich unmittelbar anschließenden Zylinderraumes des Kolbenspeichers zumindest die Größe des Durchmessers des Innenraumes des Filtergehäuses hat. Der Übergang des Filtergehäuses in den Kolbenspeicher ist somit praktisch absatzlos.

Hinsichtlich des Betriebsverhaltens, insbesondere beim Rückspülbetrieb, ist "vorzugsweise der größte Wert des Volumens der Fluidseite des Druckspeichers gleich oder größer als das Volumen des die Filterelemente umgebenden Innenraumes des Filtergehäuses. Somit steht im Speicher ein ausreichend großes Volumen des Filtrats zur Verfügung, um den Volumenstrom der Rückspülmenge auszugleichen und dadurch den Volumenstrom des abgegebenen Filtrats während eines Rückspülvorgangs konstant zu halten.

Die Filterelemente können in Form konisch ausgebildeter Spaltsiebrohrelemente vorgesehen sein.

Nachstehend ist die Erfindung anhand eines in der Zeichnung dargestellten Ausführungsbeispiels im einzelnen erläutert.

Es zeigen:
- Fig. 1: eine Symboldarstellung der hydraulischen Schaltung eines Ausführungsbeispiels der erfindungsgemäßen Filtervorrichtung in Form einer Rückspülfiltervorrichtung und
- Fig. 2: einen Längsschnitt des Filtergehäuses und der zugeordneten Speichereinrichtung des Ausführungsbeispiels.

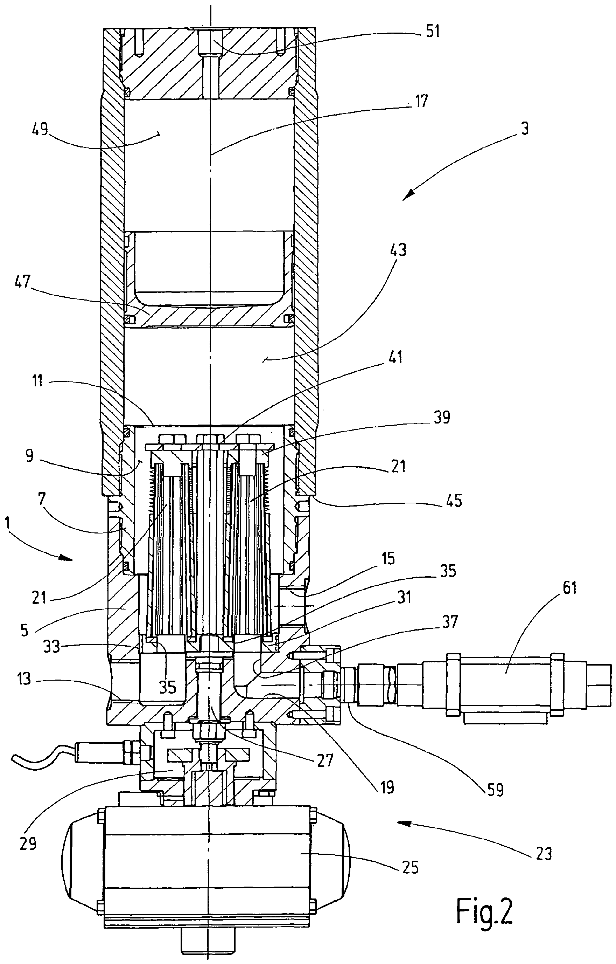

Die erfindungsgemäße Filtervorrichtung ist am Beispiel einer Rückspülfiltervorrichtung erläutert. Die Vorrichtung weist ein in Fig.2 als Ganzes mit 1 bezeichnetes Filtergehäuse sowie eine Speichereinrichtung auf, die beim dargestellten Ausführungsbeispiel durch einen Kolbenspeicher 3 gebildet ist. Das Filtergehäuse 1 ist zweiteilig ausgebildet und besteht aus einem Gehäuseunterteil 5 und einem Gehäuseoberteil 7, die, unter Bildung einer Abdichtung miteinander verschraubt sind. Das hohlzylindrische Gehäuseoberteil 7 definiert zusammen mit dem Gehäuseunterteil 5 einen Gehäuseinnenraum 9 in Form eines Hohlzylinders, der an seinem oberen Ende 11 offen ist.

Das Gehäuseunterteil 5 und eine daran befestigte Schwenkeinrichtung 23 entsprechen in ihrer Bauweise im Wesentlichen den betreffenden Komponenten einer Rückspülfiltervorrichtung, wie sie aus DE 10 2004 004 756 A1 an sich bekannt ist, so dass hier nicht auf sämtliche konstruktiven Einzelheiten des Gehäuseunterteils 5 und der Schwenkeinrichtung 23 eingegangen werden muß. Wie bei dieser dem Stand der Technik entsprechenden Lösung weist das Unterteil 5 einen Einlass 13 für das zu filtrierende Fluid sowie einen Auslass 15 für das filtrierte Fluid auf. Diametral der Hochachse 17 gegenüberliegend ist zu dem Einlass 13 innerhalb des Gehäuseunterteils 5 ein Rückspülauslass 19 angeordnet, über den die Rückspülfluidmenge aus der Vorrichtung abführbar ist.

1

In das Filtergehäuse 1 sind nach oben hin konisch zulaufende Filterelemente 21 eingesetzt, wobei anstelle der konischen Filterelemente 21 auch zumindest teilweise zylindrische Filterelemente (nicht dargestellt) treten könnten. Die angesprochenen konischen Filterelemente 21, die aus sog. Spaltsiebrohr-Filterelementen bestehen können, sind im Abstand voneinander entlang eines Kreisbogens innerhalb des Filtergehäuses 1 um die Hochachse 17 gruppiert. Bei einer nicht näher dargestellten Ausführungsform können auch in Gruppen unterteilt mehrfach entlang von zylindrischen Bögen die Filterelemente 21 angeordnet sein. Bei der in Fig.2 gezeigten Ausführungsform sind jedoch insgesamt vier Filterelemente 21 diametral zur Hochachse 17 gesehen gegenüberliegend angeordnet. In Blickrichtung auf die Fig.2 gesehen ist dabei das rechtsseitig sichtbare Filterelement 21 in seiner Rückspülstellung gezeigt, während sich die übrigen Filterelemente 21 in ihrer Filtrationsstellung befinden.

Wie bei der erwähnten, bekannten Lösung (DE 10 2004 004 756 A1) können die einzelnen Filterelemente 21 mittels der als Ganzes mit 23 bezeichneten Schwenkeinrichtung nacheinander von ihrer Filtrationsstellung in die Rückspülstellung und wieder in die Filtrationsstellung zurück bewegt werden, wobei die Umlaufbewegung für die einzelnen Filterelemente 21 sowohl im Uhrzeigersinn als auch entgegen dem Uhrzeigersinn erfolgen kann. Die Schwenkeinrichtung 23 selbst weist einen Antriebsmotor 25 (hydraulisch oder elektrisch) auf, der über ein Getriebe 29 eine gesteuerte, absatzweise Drehbewegung einer Welle 27 erzeugt, die mit einem Filterträger 31 verbunden ist. Dieser ist mit seinem kreisrunden Umfang über eine Dichtungsanordnung 33 an der Innenwand des Gehäuseunterteils 5 drehbar und abgedichtet geführt.

Die Filterelemente 21 sind auf dem Filterträger 31 so angeordnet, dass ihr innerer Filterhohlraum mit Öffnungen 35 im Filterträger 31 fluchtet. Jeweils eine dieser Öffnungen 35 des Filterträgers 31 ist auf eine Rückspülöffnung 37 ausrichtbar, wie dies in Fig.2 am Beispiel des rechtsseitig sichtbaren Filterelementes 21 gezeigt ist, das sich in seiner Rückspülstellung befindet. Die übrigen Filterelemente 21 sind über die Öffnungen 35 im Filterträger 31 mit dem Filtereinlass 13 in Verbindung, so dass für den Filtrationsbetrieb Fluid in den inneren Filterhohlraum dieser Filterelemente 21 einströmen kann und zur Reinseite, also zum Innenraum 9 des Filtergehäuses 1, gelangen kann, von wo das Filtrat über den Filterauslass 15 austritt. Als Halteeinrichtung für die auf dem Filterträger 31 befindlichen Filterelemente 21 ist eine Filterabdeckung 39 vorgesehen, die mit dem oberen Ende 41 der Antriebswelle 27 verschraubt ist.

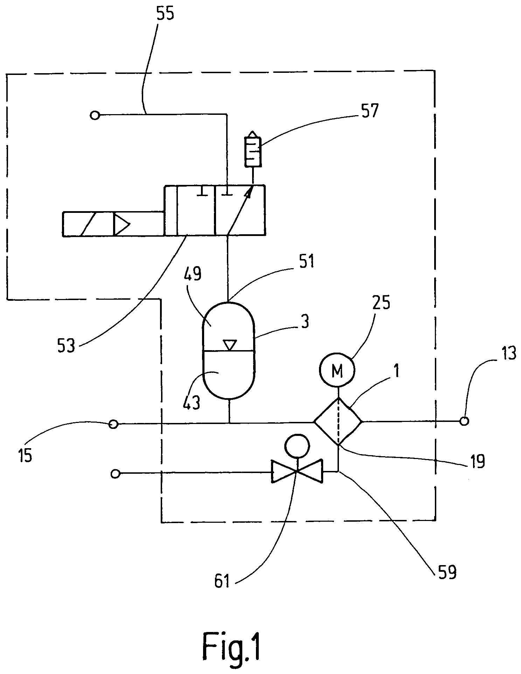

Die beim vorliegenden Beispiel als Kolbenspeicher 3 ausgebildete Speichereinrichtung ist bei dem hier gezeigten Ausführungsbeispiel mit dem Filtergehäuse 1 zu einer einheitlichen Baueinheit vereinigt. Wie Fig.2 zeigt, ist der Kolbenspeicher 3 an seinem in der Figur unten liegenden Ende 45 offen, und der Zylindermantel des Kolbenspeichers 3 übergreift mit seinem offenen Ende 45 das offene Ende 11 des oberen Gehäuseteils 7 des Filtergehäuses 1, mit dem er unter Bildung einer Abdichtung verschraubt ist. Somit geht der die Reinseite bildende Innenraum 9 des Filtergehäuses 1 praktisch absatzlos in den Zylinderraum 43 des Kolbenspeichers 3 über, der die Fluidseite der Speichereinrichtung bildet. Auf der gegenüberliegenden Seite des als bewegliches Trennelement dienenden Kolbens 47 ist der Arbeitsraum 49 des Kolbenspeichers 3 bis auf einen Druckmittelanschluß 51 geschlossen. Wie Fig.1 zeigt, ist über den Druckmittelanschluß 51 eine Ventileinrichtung 53 am Arbeitsraum 49 angeschlossen. Die Ventileinrichtung 53 ermöglicht es, den Arbeitsraum 49 mit einem Arbeitsgas zu versorgen, beim vorliegenden Beispiel mit Druckluft über eine Druckluftleitung 55, oder den Druckmittelanschluß 51 zu sperren, oder, wie es in Fig.1 gezeigt ist, den Arbeitsraum 49 über den Anschluß 51 mit der Umgebung zu verbinden, über eine Filter/Drossel-Einrichtung 57.

Wenn im normalen Filtrationsbetrieb der Arbeitsraum 49 mit einem dem Systemdruck der Filtervorrichtung angepaßten Volumen an Arbeitsgas (Druckluft) versorgt ist, kann der Kolbenspeicher 3 in der Art eines Pulsationsdämpfers tätig sein. Bei diesem Betriebszustand ist eine am Rückspülauslass 19 angeschlossene Rückspülleitung 59 durch ein Rückspülventil 61 geschlossen. Um einen Rückspülvorgang zu starten, wird das Rückspülventil 61 geöffnet, und der Druckmittelanschluss 51 des Kolbenspeichers 3 wird über die Ventileinrichtung 53 mit der Druckluftleitung 55 verbunden, um im Arbeitsraum 49 den eingestellten Systemdruck aufrecht zu erhalten. Das Öffnen des Rückspülventils 61 hat den Abstrom einer Rückspülmenge an Fluid aus dem Filtergehäuse 1 zur Folge, was an sich zu einem Einbruch des Volumenstromes des gefilterten, aus dem Auslass 15 austretenden Filtrats zur Folge hätte. Wegen des im Arbeitsraum 49 des Kolbenspeichers 3 herrschenden Systemdruckes wirkt der Kolbenspeicher 3 in dieser Situation als eine Fluidvolumen aus dem Zylinderraum 43 heraus zur Reinseite 9 (Innenraum 9) nachschiebende Pumpe, wodurch ein Volumenstromabfall an Fluid während des Rückspülens vermieden ist.

Wenn nach erfolgter Rückspülung das Rückspülventil 61 schließt, dann verbindet die Ventileinrichtung 53 den Arbeitsraum 49 zur Umgebung, so dass Druckluft über die Einrichtung 57 (Fig.1) gedrosselt entweicht, bis sich der Kolben 47 entsprechend weit in Fig.2 nach oben bewegt hat und das Volumen des Zylinderraumes 43 wieder den gewünschten Wert besitzt, so dass für den nachfolgenden Filtrationsbetrieb bei geschlossener Ventileinrichtung 53 wiederum eine Pulsationsdämpfung erfolgt oder für einen nachfolgenden Rückspülvorgang ein gewünschtes Nachschubvolumen bei Druckluftzufuhr zum Arbeitsraum 49 zur Verfügung steht.

Bei der dargestellten Bauweise mit absatzlosem Übergang des Filtergehäuses 1 in den Zylinderraum 43 des Kolbenspeichers 3 ergeben sich zum einen keinerlei Verluste aufgrund eines Strömungswiderstandes zwischen Innenraum 9 und Zylinderraum 43. Des weiteren läßt sich dadurch bei kompakter Bauweise ein ausreichend großes Volumen für die Räume 43 und 49 des Kolbenspeichers 3 realisieren, wobei der größte Wert des Volumens des die Fluidseite bildenden Zylinderraumes 43 wesentlich größer sein kann als das Volumen des die Filterelemente 21 umgebenden Innenraumes 9 des Filtergehäuses 1. Die Nachschiebe- oder Pumpwirkung des Kolbenspeichers 3 beim Rückspülvorgang verhindert nicht nur einen Einbruch des Volumenstromes des Filtrats, sondern begünstigt auch die Effizienz der Filterreinigung beim Rückspülvorgang.

Es versteht sich, dass anstelle des als Speichereinrichtung vorgesehenen Kolbenspeichers 3 andersartige Speichereinrichtungen Verwendung finden könnten, etwa andere hydropneumatische Speicher, wie Blasenspeicher oder Membranspeicher oder Balgspeicher. Anstelle hydropneumatischer Speicher könnten auch Einrichtungen Verwendung finden, bei denen das Trennelement nicht pneumatisch, sondern mechanisch bewegbar ist, beispielsweise durch mechanische Kopplung eines Speicherkolbens mit einem mechanischen oder elektrischen oder hydraulischen Antrieb oder mittels auf das Trennelement einwirkenden hydraulischen Drucks.

Über das Gasfüllsystem des Speichers ist ein schnelles Füllen des Gasraumes ermöglicht und durch Einsatz einer insoweit adaptierbaren Drosselschaltung erfolgt ein langsames Laden des Speichers auf das Druckniveau bezogen auf die Flüssigkeit der Filtereinheit. Ferner ist die erfindungsgemäße Lösung dadurch charakterisiert, dass das Gassystem oder Gasfüllsystem zum Ausgleich eines etwaigen Druckeinbruchs oder von Druckschwankungen auf einem anderen Druckniveau betrieben werden kann, als es durch das Druckniveau des Flüssigkeitsfilters vorgegeben ist. Ferner kann der genannte Speicher in der Art eines Dämpfers eingesetzt sein, um Druckschwankungen im Gesamtsystem zu glätten.

Anstelle der genannten Spaltsiebrohrelemente 21 können auch entsprechend adaptierte Drahtgewebeelemente eingesetzt sein und ein Aufladen des Speichers ist wahlweise nach einem kompletten Rückspülzyklus, beispielsweise aller vier Elemente oder auch nach dem Rückspülen nur eines Elementes, möglich.

## Patentansprüche

1. Filtervorrichtung mit mindestens einem Filtergehäuse (1), in dem mehrere Filterelemente (21) angeordnet sind, die innerhalb des Filtergehäuses (1) eine Reinseite von einer Rohseite (13) trennen, wobei das Filtergehäuse (1) einen zylindrischen Innenraum (9) bildet, der an seinem oberen Ende (11) offen ist, um dessen Hochachse (17) die Filterelemente (21) in Form von Filterkerzen gruppiert sind, die für eine Filtration oder Rückspülung in beiden Richtungen durchströmbar sind, wobei zumindest ein Filterelement (21) mittels einer Rückspül-einrichtung (37, 59, 61) zum Abreinigen seiner wirksamen Filterfläche rückgespült wird, während gleichzeitig die anderen Filterelemente (21) für die Filtration von innen nach außen durchströmt sind, und wobei die Filterelemente (21) nacheinander mittels einer einen Drehantrieb (25, 29) aufweisenden Schwenkeinrichtung (23) von ihrer Filtrationsstellung in eine auf eine Rückspülleitung der Rückspüleinrichtung (37, 59, 61) ausgerichtete Rückspülstellung und wieder in die Filtrationsstellung zurück um die Hochachse (17) schwenkbar angeordnet sind, **dadurch gekennzeichnet, dass** auf der Reinseite des jeweiligen Filtergehäuses (1) mindestens eine Speichereinrichtung in Form eines hydropneumatischen Druckspeichers (3) vorgesehen ist, mit mindestens einem beweglichen Trennelement (47), das den Druckspeicher (3) in einen Arbeitsraum (49) und einen Druckraum (43) unterteilt, von denen der Arbeitsraum (49) mit einer Druckluftquelle (55) verbindbar ist, dass der die Filterelemente (21) umgebende Innenraum (9) des Filtergehäuses (1) die mit dem Druckraum (43) des Druckspeichers (3) verbundene Reinseite bildet und in den der die Fluidseite bildende Druckraum (43) des Druckspeichers (3) übergeht, der zur Hochachse (17) koaxial am Filtergehäuse (1) angeordnet ist, dass die Rückspüleinrichtung (37, 59, 61) in der mit der Rohseite (13) des rückzuspülenden Filterelements (21) verbundenen Rückspülleitung (59) ein Rückspülventil (61) aufweist, das für Rückspülvorgänge öffenbar ist, und dass an dem Arbeitsraum (49) des Druckspeichers (3) eine Ventileinrichtung (53) angeschlossen ist, die in zeitlichem Zusammenhang mit der Betätigung des Rückspülventils (61) für eine Zufuhr von Druckluft zu dem oder die Abgabe von Druckluft aus dem Arbeitsraum (49) des Druckspeichers (3) ansteuerbar ist.

2. Filtervorrichtung nach Anspruch 1, **dadurch gekennzeichnet, dass** der Druckspeicher (3) in Form eines Kolbenspeichers vorgesehen ist.

3. Filtervorrichtung nach Anspruch 2, **dadurch gekennzeichnet, dass** sich die Öffnung des oberen Endes (11) des Innenraumes (9) des Filtergehäuses (1) über dessen gesamten Innendurchmesser erstreckt und dass der Durchmesser des sich unmittelbar anschließenden Druckraumes (43) des Kolbenspeichers (3) zumindest die Größe des Durchmessers des Innenraumes (9) des Filtergehäuses (1) hat.

4. Filtervorrichtung nach Anspruch 2 oder 3, **dadurch gekennzeichnet, dass** der Zylindermantel des Kolbenspeichers (3) das offene obere Ende (11) des Filtergehäuses (1) übergreift, mit Innengewinde versehen und mit einem Außengewinde des Filtergehäuses (1) verschraubt ist.

5. Filtervorrichtung nach einem der vorstehenden Ansprüche, **dadurch gekennzeichnet, dass** der größte Wert des Volumens des Druckraums (43) des Druckspeichers (3) gleich oder größer als das Volumen des die Filterelemente (21) umgebenden Innenraumes (9) des Filtergehäuses (1) ist.

6. Filtervorrichtung nach einem der vorstehenden Ansprüche, **dadurch gekennzeichnet, dass** Filterelemente (21) in Form konisch ausgebildeter Spaltsiebrohrelemente vorgesehen sind.

## Claims

1. Filter device with at least one filter housing (1), in which multiple filter elements (21) are arranged which separate a filtered side from an unfiltered side (13) within the filter housing (1), wherein the filter housing (1) forms a cylindrical internal space (9) which is open at its upper end (11) with filter elements (21) in the form of filter candles grouped around its vertical axis.(17), through which flow can take place in both directions for a filtration or backflushing, wherein at least one filter element (21) is backflushed by means of a backflushing device (37, 59, 61) to clean its effective filter area, while at the same time flow takes place through the other filter elements (21) for filtration from inside to outside and wherein the filter elements (21) are arranged to be swivellable successively about the vertical axis (17) from their filtration position to a backflushing position aligned with a backflushing line of the backflushing device (37, 59, 61) and back to a filtration position by means of a swivelling device (23) having a rotary drive (25, 29), **characterised in that** at least one accumulator device is provided in the form of the filtered side of the respective filter housing (1) at least one storage device in a hydropneumatic pressure accumulator (3), with at least one movable separator element (47), which divides the pressure accumulator (3) into an operating chamber (49) and a pressure chamber (43), of which the operating chamber (49) can be connected to a compressed air source (55), that the internal space (9) of the filter housing (1) surrounding the filter elements (21) forms the filtered side connected to the pressure chamber (43) of the pressure accumulator (3) and into which the pressure chamber (43) of the pressure accumulator (3) forming the fluid side merges (3) which is arranged coaxially to the vertical axis (17) on the filter housing (1), that the backflushing device (37, 59, 61) has a backflushing valve (61),in the backflushing line (59), connected to in the unfiltered side (13) of the filter element (21) being backflushed, which can be opened for backflushing procedures, and that a valve device (53) is connected to the operating chamber (49) of the pressure accumulator (3), which can be controlled in a timed relationship with the actuation of the backflushing valve (61) to supply compressed air to or discharge compressed air from the operating chamber (49) of the pressure accumulator (3).

2. Filter device in accordance with claim 1, **characterised in that** the pressure accumulator (3) is in the form of a piston-type pressure accumulator.

3. Filter device in accordance with claim 2, **characterised in that** the aperture of the upper end (11) of the internal space (9) of the filter housing (1) extends over its whole inside diameter and that the diameter of the pressure chamber (43) of the piston accumulator (3) directly connected to it is at least equal to the diameter of the internal space (9) of the filter housing (1).

4. Filter device in accordance with claim 2 or 3, **characterised in that** the cylinder jacket of the piston accumulator (3) overlaps the open upper end (11) of the filter housing (1), is threaded internally and screwed to the external thread of the filter housing (1).

5. Filter device in accordance with any of the preceding claims, **characterised in that** the maximum value of the volume of the pressure chamber (43) of the pressure accumulator (3) is equal to or greater than the volume of the internal space (9) of the filter housing (1) surrounding the filter element (21).

6. Filter device in accordance with any of the preceding claims, **characterised in that** filter elements (21) are provided in the form of tapered slotted screen tube elements.

## Revendications

1. Installation de filtration, comprenant au moins une enveloppe (1) de filtre, dans laquelle sont disposés plusieurs éléments (21) de filtre, qui séparent, à l'intérieur de l'enveloppe (1) du filtre, un côté propre d'un côté (13) brut, l'enveloppe (1) du filtre formant un espace (9) intérieur cylindrique, ouvert à son extrémité (11) supérieure, autour de l'axe (17) vertical duquel les éléments (21) du filtre sont regroupés sous la forme de bougies de filtre, qui, pour une filtration ou un lavage en retour, peuvent être traversés dans les deux sens, dans laquelle au moins un élément (21) de filtre est, au moyen d'un dispositif (37, 59, 61) de lavage en retour, lavé en retour pour nettoyer sa surface filtrante active, tandis qu'en même temps, les autres éléments (21) du filtre sont traversés pour la filtration de l'intérieur vers l'extérieur et dans laquelle les éléments (21) de filtre sont montés pivotants autour de l'axe (17) vertical, l'un après l'autre, au moyen d'un dispositif (23) de pivotement ayant un entraînement (25, 29) en rotation, de leur position de filtration à une position de lavage en retour dirigée sur un conduit de lavage en retour du dispositif (37, 59, 61) de lavage en retour et ramenés à la position de filtration, **caractérisée en ce que**, du côté propre de l'enveloppe (1) de filtre respective, est prévu au moins un dispositif d'accumulation sous la forme d'un accumulateur (3) de pression hydropneumatique ayant au moins un élément (47) de séparation mobile, qui subdivise l'accumulateur (3) de pression en un espace (49) de travail et en un espace (43) de pression, dont l'espace (49) de travail peut communiquer avec une source (55) d'air comprimé, **en ce que** l'espace (9) intérieur, entourant les élément (21) de filtre, de l'enveloppe (1) de filtre, forme le côté propre relié à l'espace (43) de pression de l'accumulateur (3) de pression et se transforme en l'espace (43) de pression, formant le côté de fluide, de l'accumulateur (3) de pression, qui est disposé, par rapport à l'axe (17) vertical, coaxialement à l'enveloppe (1) de filtre, **en ce que** le dispositif (37, 59, 61) de lavage en retour a, dans le conduit (59) de lavage en retour communiquant avec le côté (13) brut de l'élément (21) de filtre lavé en retour, une soupape (61) de lavage en retour, qui peut s'ouvrir pour des opérations de lavage en retour et **en ce que**, à l'espace (49) de travail de l'accumulateur (3) de pression est raccordé un dispositif (53) de soupape, qui, en relation dans le temps avec l'actionnement de la soupape (61) de lavage en retour, peut être commandé pour envoyer de l'air comprimé à l'espace (49) de travail de l'accumulateur (3) de pression ou pour en retirer.

2. Installation de filtration suivant la revendication 1, **caractérisée en ce que** l'accumulateur (3) de pression est prévu sous la forme d'un accumulateur à piston.

3. Installation de filtration suivant la revendication 2, **caractérisée en ce que** l'ouverture de l'extrémité (11) supérieure de l'espace (9) intérieur de l'enveloppe (1) de filtre s'étend sur tout son diamètre intérieur et **en ce que** le diamètre de l'espace (43) de pression, se raccorde directement de l'accumulateur (3) à piston a au moins la dimension du diamètre de l'espace (9) intérieur de l'enveloppe (1) de filtre.

4. Installation de filtration suivant la revendication 2 ou 3, **caractérisée en ce que** la surface latérale cylindrique de l'accumulateur (3) à piston empiète sur l'extrémité (11) supérieure ouverte de l'enveloppe (1) de filtre, est pourvue de taraudage et est vissée avec un filetage de l'enveloppe (1) de filtre.

5. Installation de filtration suivant l'une des revendications précédentes, **caractérisée en ce que** la valeur la plus grande du volume de l'espace (43) de pression de l'accumulateur (3) de pression est supérieure ou égale au volume de l'espace (9) intérieure, entourant les éléments (21) de filtre, de l'enveloppe (1) de filtre.

6. Installation de filtration suivant l'une des revendications précédentes, **caractérisée en ce que** des éléments (21) de filtre sont prévus sous la forme d'éléments tubulaires de tamis à faibles interstices constitués de manière conique.
